# EUROPEAN PATENT APPLICATION

(11) **EP 2 730 262 A1**
(43) Date of publication of application: **14.05.2014**
(21) Application number: 13189043.6
(22) Date of filing: 17.10.2013
(51) Int. Cl.: A61G 1/06, A61G 3/08

(54) **Stretcher support system and use**

(30) Priority: 13.11.2012 DK 201200712; 10.01.2013 DK 201300013
(71) Applicant: BE-GE JANY A/S, 7741 Frøstrup (DK)
(72) Inventor: Jepsen, Dennis Stjernholm, 7741 Frøstrup (DK)
(74) Representative: Holme Patent A/S

(57) **Abstract**

The invention includes a stretcher system for vehicles with two or more chairs (1,4) in which the stretcher system comprises fittings (9, 13), which can be placed onto two chairs (1, 4) and where the fittings (9, 13) form the support for a plurality of - mainly - two rails (10, 20) onto which a stretcher can be placed (22).

The invention makes it possible to introduce a stretcher (22) in vehicles such as taxis, without first having to remove the vehicle's chairs (1, 4).

## Description

The invention relates to a stretcher system for vehicles with two or more chairs with foldable backrest.

The invention also relates to the use of the stretcher system.

It is known to use vehicles which can carry a patient lying on a stretcher.

In for example Sweden, a taxi / haulier can be hired to transport patients, which is beneficial to the haulier as he can be exempted from paying tax on the vehicle.

However, in order for the vehicle to be able to transport patients, it must be furnished accordingly.

In order for taxis to be approved for transportation of patients, the vehicle must be furnished to accommodate recumbent patients.

In this regard, it is a requirement that the recumbent patient must be able to look out the window.

This is a problem if the vehicle, in addition to being used for transport of stretchers, is also used for transporting non-recumbent persons, such as by normal taxi rides.

In order to make room for the stretcher, it is necessary to remove installed chairs from the vehicle in order to mount a frame to the floor that fits a stretcher type.

After transporting a patient lying on a stretcher, the haulier thus has to reinstall the chairs before the vehicle once again can be used for regular transport of sitting passengers.

From FR2798842 A1 (TECHNIC GENERAL FR]) is known a stretcher system for aircraft with two or more chairs with fold-down backrest where the stretcher system includes fittings that can be placed on two chairs, and where the fittings provide support for two rails on which a stretcher can be placed.

However, there are several drawbacks of the technology described in FR2798842, including the fact that it requires specially designed chairs and several relatively complicated safety anchorages in order to work.

It is therefore an object of the invention to provide a stretcher system without the aforementioned disadvantages.

The object of the invention is achieved by a stretcher system of the type described in the introduction to claim 1, which is characterised in the fact that the stretcher system contains fittings, which contain a mounting rod that can be brought into locked engagement with the installation pipes. These installation pipes are designed to be mounted / fastened vertically to chairs where the fittings will form support for a plurality of , mainly two, rails onto which a stretcher can be placed.

In this way, it thus becomes possible to use a stretcher system in a vehicle such as a taxi without having to specially engineer or disassemble the vehicle's chairs and which functions without adding complicated safety anchorages.

Other preferred embodiments of the stretcher system are stated in claims 2 to 4.

As mentioned, the invention also relates to the use of the stretcher system for vehicles including taxis.

The invention will now be further explained with reference to the drawings, in which:
Fig. 1 shows two successive chairs from a transport vehicle.
Fig. 2 shows the two chairs from Fig. 1 but with folded backrests.
Fig. 3 shows free end fittings in a chair with folded backrest.
Fig. 4 shows fittings to be mounted in free end fittings on chairs with folded backrest.
Fig. 5 shows, just as Fig. 4 but in a different projection, fittings for mounting in free end fittings on chairs with folded backrest.
Fig. 6 shows, just as Fig. 4 and Fig. 5 but in a different projection, fittings for mounting in free end fittings on chairs with folded backrest.
Fig. 7 shows the mounting of fittings to support the stretcher rails to the front of two consecutive chairs with folded backrest, including the manual activation of a fitting lock.
Fig. 8 shows the mounting of the fitting for the support of the stretcher rails for the rear of two successive chairs with folded backrests.
Fig. 9 shows the assembly of the stretcher rails to fittings mounted on chairs with folded backrest.
Fig. 10 shows the assembled stretcher rails for fittings mounted on chairs with folded backrest.
Fig. 11 shows the installation of the stretcher to stretcher rails, which are mounted on chairs with folded backrest.
Fig. 12 shows the manual release of the lock to fix the stretcher to stretcher rails by locking the front stretcher rail fitting.
Fig. 13 shows the manual activation of the rear lock for fixing the stretcher to stretcher rails and fittings.
Fig. 14 shows the stretcher placed on the stretcher rails mounted on stretcher rail fittings, which are fastened to the chair with folded backrests.

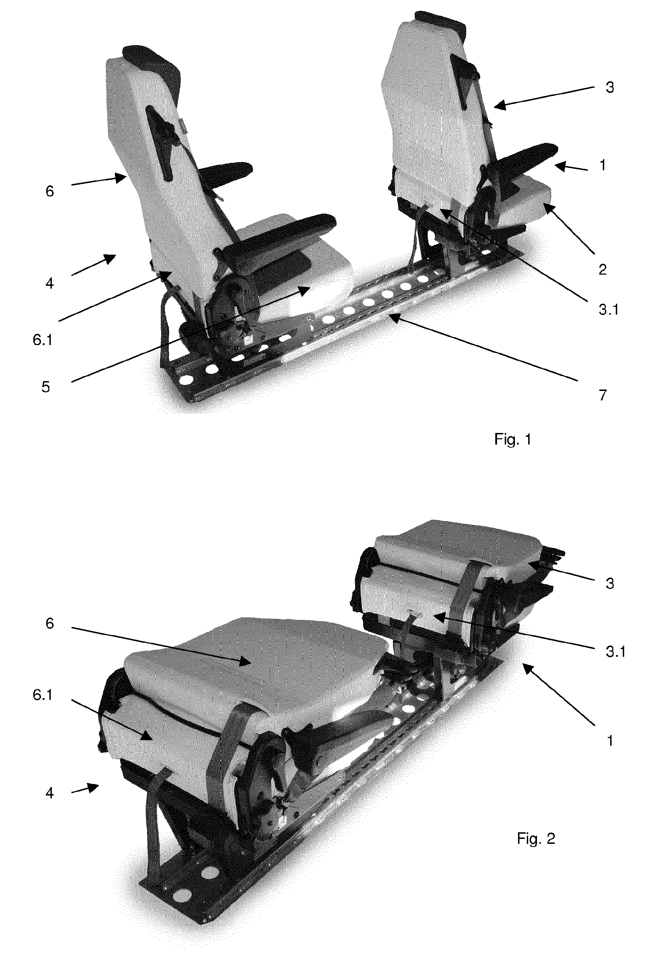

Fig. 1 shows two chairs 1, 4 for means of transportation such as cars, where the chairs 1, 4 are mainly located at the same longitudinal axis and in the same direction.

The laboratory setup of the chairs 1, 4 in Fig. 1, shows the chairs 1, 4 placed on a set of rails 7.

The same foundation design can be used in a vehicle where the chairs 1, 4 must be placed.

The chairs 1,4 are fitted with seats 2,5, and backrests 3,6 which can be folded down as shown in Fig. 2 and sub-parts of the backrest 3.1, 6.1.

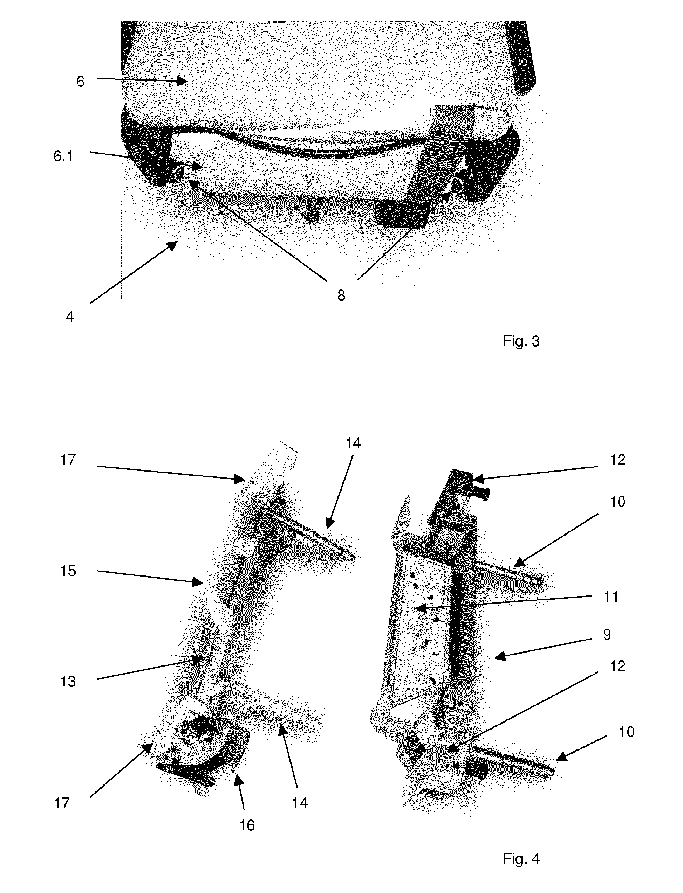

As shown in Fig. 3, the chairs 1, 4 are fitted with installation pipes 8, which are primarily mounted vertically in the sub-parts of the backrest 3.1, 6.1 and hidden by the backrests 3, 6 when they are upright.

Fig. 4 depicts a fitting 9 and a fitting 13.

The fitting 9 is fitted with two mounting rods 10 which are engageable with the installation pipes 8 at the front chair 1.

In addition, the fitting 9 is fitted with a locking mechanism 11, which is suitable for locking a stretcher that is adapted to the fitting 9 and guided and positioned into the fitting 9 via guideways 12.

The fitting 9 is also fitted with a handle 15 for handling the fitting 9.

The fitting 13 is fitted with two mounting rods 14 which are engageable with the installation pipes 8 at the rear chair 4.

In addition, the fitting 13 is fitted with a locking mechanism 16 which is suitable for locking a stretcher that is adapted to the fitting 13 and guided and positioned into the fitting 13 via guideways 17.

The fitting 13 is also fitted with a handle 15 for operating the fitting 13.

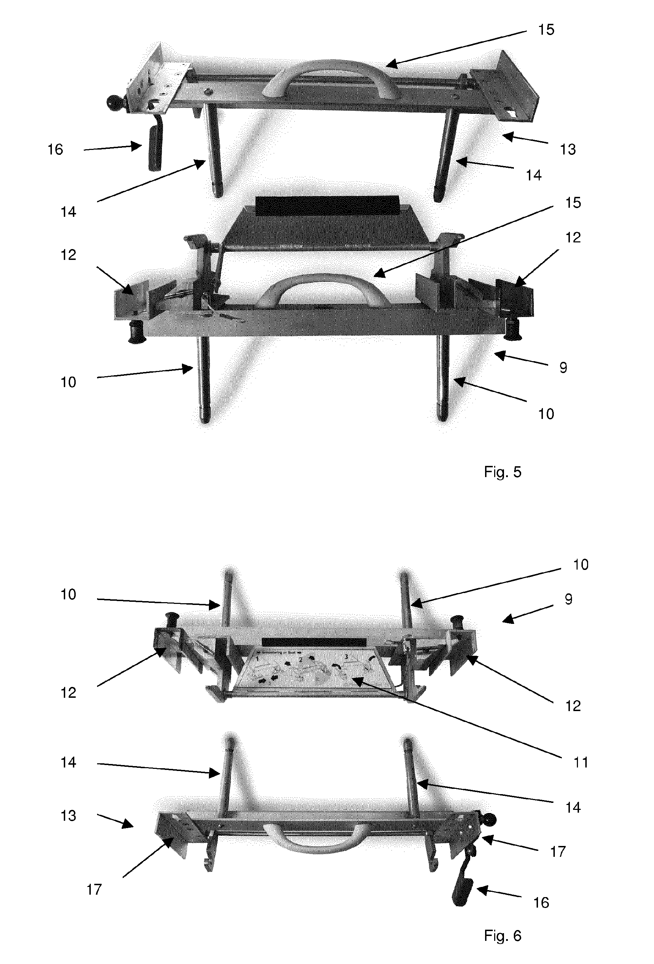

Fig. 5 and Fig. 6 show the same fittings 9, 13 as Fig. 4 but depicted from other perspectives.

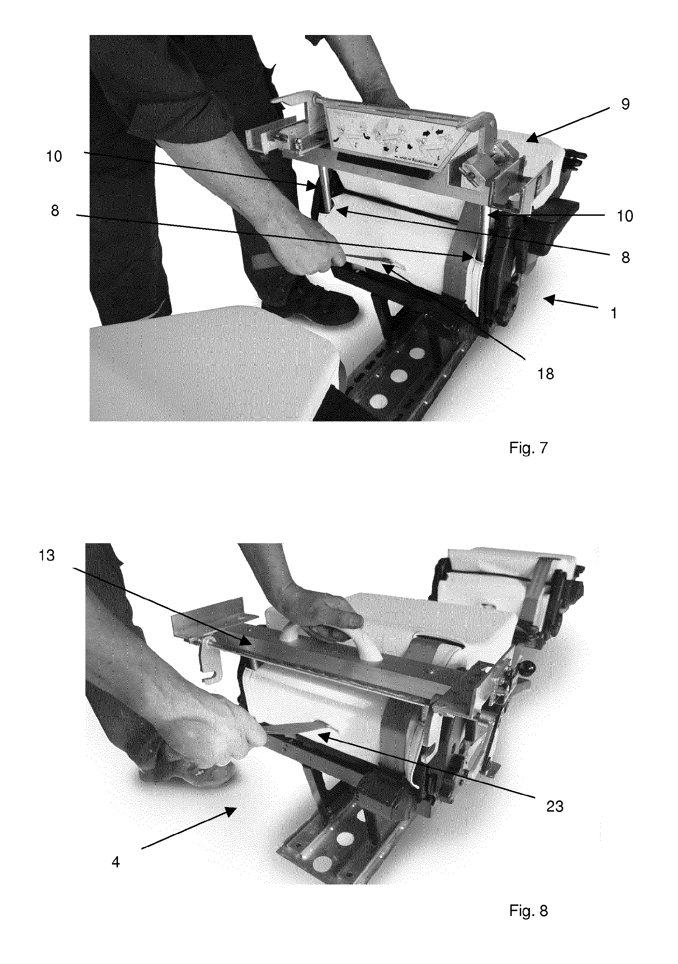

Fig. 7 shows how a fitting 9 can be mounted to the front chair 1 by introducing the fitting's 9 mounting rod 10 into the installation pipe 8 located in the chair 1.

The installation pipes 8 are fitted with a locking device for fixation of the mounting rods 10, which is triggered manually by means of a release lever 18.

The locking device in the installation pipes 8 is designed to lock the fitting 9 to chair 1 such that the fitting 9 can only be removed by manual activation of the release lever 18.

Fig. 8 shows how the fitting 13 can be mounted to the rear chair 4 in the same way as the fitting 9 was mounted to the chair 1, where the rear chair 4 is fitted with a release mechanism 23 for releasing a locking mechanism that locks the fitting 13 to the chair 4

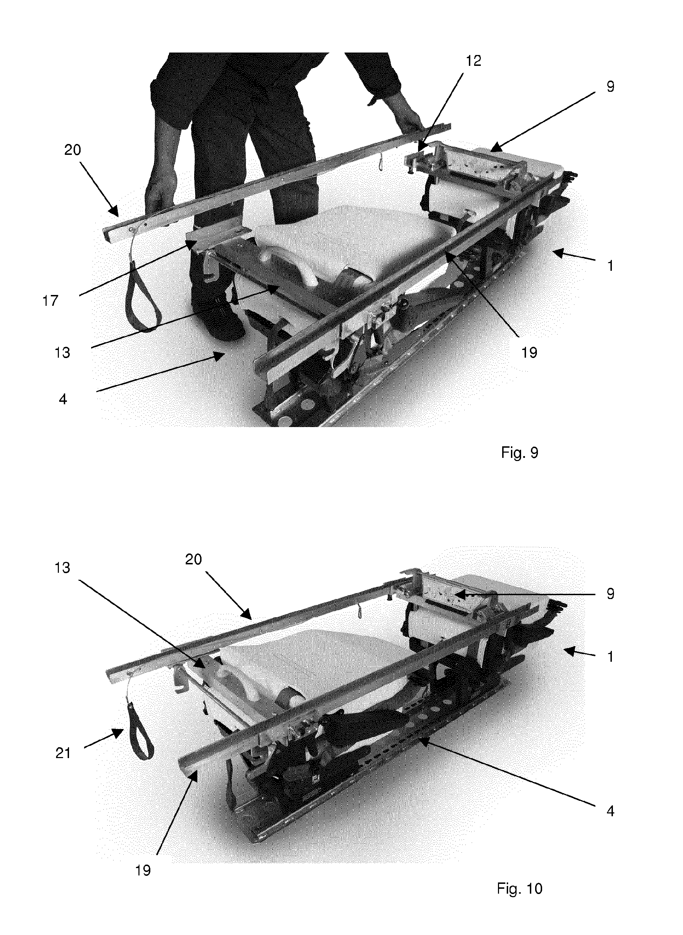

Fig. 9 shows how a rail 19 is located in a guideway 12 in the fitting 9, which is attached to the front chair 1, and is also located in a guideway 17 in the fitting 13, which is attached to the rear chair 4, thereby mechanically connecting the two chairs 1, 4 and fittings 9, 13.

Fig. 10 also shows how a rail 20 is located in a guideway 12 in the fitting 9, which is attached to the front chair 1, and is also located in a guideway 17 in the fitting 13, which is attached to the rear chair 4, thereby mechanically connecting the two chairs 1, 4 and fittings 9, 13 which are then connected by the two parallel rails 19, 20.

The rails 19, 20 are fitted with devices for fixing the rails 19, 20 to the fittings 9, 13, such as recesses or tracks that can engage with complementary shaped counterparts formed in the fittings 9, 13.

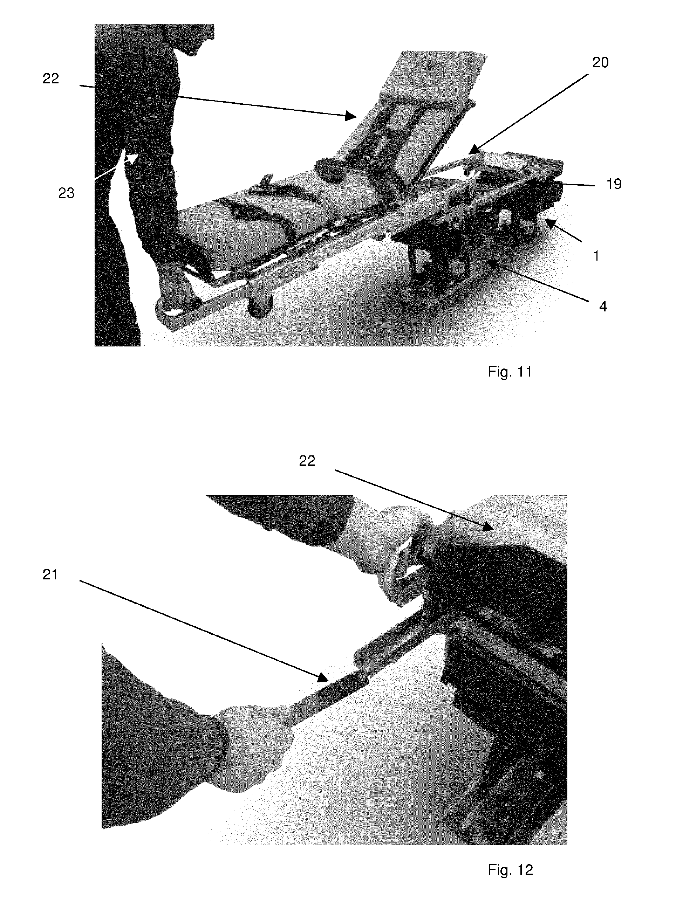

Fig. 11 shows how a patient stretcher 22 can be placed on the rails 19, 20, and as is shown by Fig. 12 the stretcher can be installed on the rails 19, 20 and fixed to the front fitting 9 through the fitting's 9 locking mechanism 11 which can be activated manually via a release lever that is located at the rear end of the rail 20 from which it is connected to the locking mechanism 11 e.g. through a wire system.

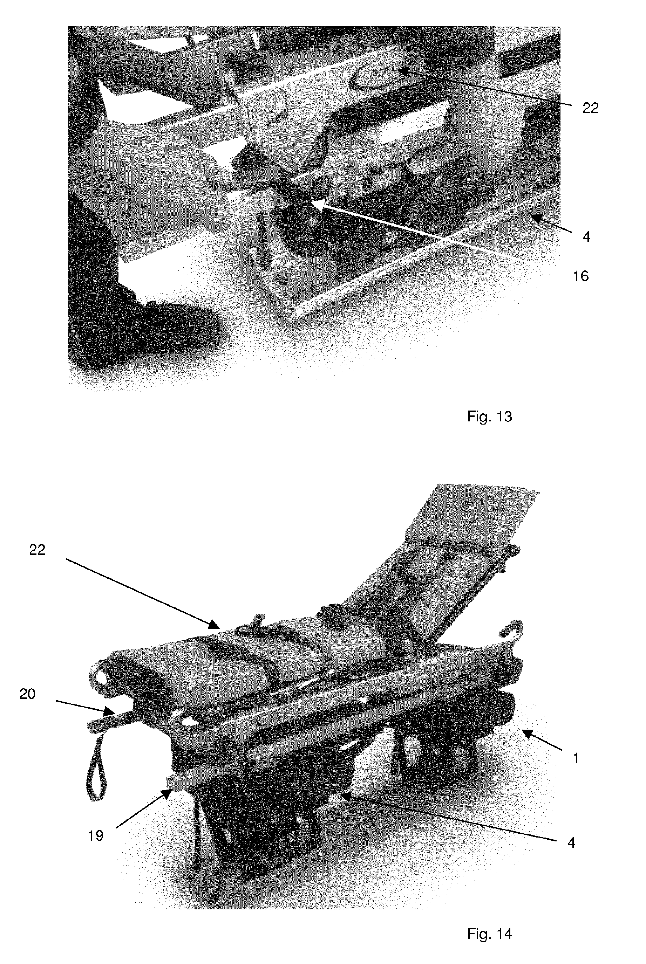

As is shown in Fig. 13, the stretcher 22 can also be locked to the rear fitting 13 by activating the locking mechanism 16.

Fig. 14 shows how a stretcher 22 via the fittings 9.13 is attached to the chairs 1, 4 and thereby provides a flexible stretcher system that can be implemented in transport vehicles such as cars and taxis and tracked vehicles, ships, trains and aircraft.

As will appear from the description, the stretcher 22 can be mounted to the chairs 1, 4 via the fittings 9, 13 and removed from the same without using any tools.

## Claims

1. Stretcher system for vehicles with two or more chairs (1, 4) with foldable backrest (3, 6) **characterized in** the fact that the stretcher system includes fittings (9, 13), which contain a mounting rod (10, 14) that can be brought into locked engagement with the installation pipes (8). These installation pipes (8) are designed to be mounted / fastened vertically to chairs (1, 4) where the fittings (9,13) will form support for a plurality of, mainly two, rails (19,20) onto which a stretcher can be placed (22).

2. Stretcher system according to claim 1 **characterized in** the fittings (9, 13) being mounted to chairs (1, 4) with folded-down backrests (3, 6), where the chairs (1, 4) are mainly located on the same longitudinal axis and in the same direction.

3. Stretcher system according to claim 1 or 2 **characterized in** the fittings (9,13) comprising a front fitting (9), which is mounted to the front chair (1) and a rear fitting (13), which is mounted to the rear chair (4).

4. Stretcher System according to one or more of chairs 1 to 3 **characterized in** the fittings (9, 13) being fitted with a mounting rod (10, 14), which is engageable with the installation pipes (8) that are located in the chairs (1, 4) where the mounting rod (10.14) can be locked to installation pipes (8) with a locking mechanism that can be triggered with a trigger mechanism (18, 23).

5. Use of the stretcher system according to claim 1 or 2 for vehicles including taxis.
